# EUROPEAN PATENT SPECIFICATION

(11) **EP 3 125 729 B1**
(45) Date of publication and mention of the grant of the patent: **29.07.2020**
(21) Application number: 15751064.5
(22) Date of filing: 02.04.2015
(51) Int. Cl.: A47J 31/36

(54) **INFUSION UNIT**
INFUSIONSEINHEIT
UNITÉ D'INFUSION

(43) Date of publication of application: 08.02.2017
(73) Proprietor: S.A.C.O.M.E. S.A., 98000 Principality of Monaco (MA); CBT Italia S.r.l., 27058 Voghera (Pavia) (IT)
(72) Inventor: DE CONTI, Fabio, 27050 Retorbido (PV) (IT); TABORELLI, Massimo, 21049 Tradate (VA) (IT); TONELLI, Alessandro, 40041 Gaggio Montano (BO) (IT)
(74) Representative: Schmalz, Günther
(86) International application number: PCT/IB2015/000838
(87) International publication number: WO 2015/150916

(56) References cited:
- EP-A1- 1 859 713
- EP-A1- 2 250 950
- WO-A1-2010/149468
- WO-A1-2011/150953
- WO-A1-2013/042011
- WO-A1-2013/182923
- WO-A1-2013/182923
- WO-A2-2011/042401
- WO-A2-2011/113854
- WO-A2-2014/016741
- CN-A- 101 411 587
- CN-A- 102 225 010
- CN-B- 102 178 456

## Description

The invention relates to an infusion unit for automatic machines for the production of an alimentary infusion, in particular but not necessarily for espresso coffee machines. The invention in particular relates to an infusion unit for a machine for the production of an alimentary infusion from a beverage ingredient contained in capsule, comprising a container with a mouth defining an infusion chamber, a closing piston for closing the infusion chamber, control means that can be activated for reversibly switching the infusion unit, from an open configuration to a closed configuration of the infusion chamber, with a mechanism for rotating the container in the open configuration into an upright tilted position for receiving the capsule from a loader and for rotating the container in a horizontal position when transitioning to the closed configuration, whereby the container is associated with an ejection piston.

With this configuration the capsule can be received in a more secure way and during the closing of the infusion unit the capsule can be moved accurately into a position, where the capsule is aligned with the closing piston before closing the infusion chamber with pressure.

Espresso coffee machines have, as is known, an infusion unit comprising a container consisting of an infusion chamber and a closing piston that are reciprocally movable with respect to each other to bring the infusion unit from an opening configuration of the infusion chamber at which the capsule is loaded and a closing configuration of the infusion chamber at which the infusion is performed. For example WO 2013/182923 A1 discloses a delivery assembly for a machine for preparing beverages via capsules comprising a support structure bearing an injector device for introducing a fluid into a capsule; a capsule-holder mounted movable in the support structure; guide means designed to enable the capsule-holder to displace between a position distanced from the injector device and a position approached to the injector device; an actuation kinematic arrangement, which can be operated for causing displacements of the capsule-holder between the distanced position and the approached position; and a longitudinally extended ejector member, mounted movable on the capsule-holder and designed to eject the capsule on the outside of the capsule-holder during displacement of the capsule-holder from the approached position to the distanced position.

The traditional infusion units can be operated manually or via an electric motor and generally have a kinematic movement for the opening and closing of the infusion chamber formed by a control lever and a control transmission comprising several rotating levers that are variously interconnected. The kinematic motion is generally quite complex and subjects the container and/or the closing piston to significant linear and/or angular movements with a consequent increase in the overall dimensions of the infusion unit.

This can complicate positioning of the infusion unit in the coffee machine, especially when due to manufacturing requirements, there is limited space available. The general object of this invention is, therefore, to provide an infusion unit which allows to overcome the technical problems of the prior art.

Within the context of this object, one aim of the invention is to provide an infusion unit that is constructively simple and extremely compact.

Another aim of the invention is to provide an infusion unit that is extremely safe, precise and reliable in operation. Especially beverage machines which receive a beverage capsule tend to block, when the capsule is not inserted with appropriate precession. Another object of the present invention therefore is to improve the charging of an infusion unit with a beverage container such, as a capsule.

To achieve this goal the invention proposes an infusion unit according to claim 1.

In an embodiment of the invention the infusion unit is arranged such that in the upright tilted position of the container the capsule at the end of the fall through the loader rests with it side walls against the inner edge of the mouth of the container and with a flange against an inner guide wall of the loader. In this advantageous aspect the capsule is brought into a defined position before the infusion unit is closed. This positon allows the capsule, especially when the the capsule has a rotational body, to self-adjust into the preferred position during the infusion unit is closed.

In another embodiment of the invention the infusion unit comprises one or more guide elements jointly along corresponding guides provided on a frame and arranged and configured so as to subject the container to a rotational and translational movement.

This aspect allows a technical uncomplicated implementation of the aforementioned inventive principles.

In another embodiment of the invention when the infusion unit is actuated from an open configuration to a closed configuration the corresponding guides are configured to guide the guide elements along a first path and when the infusion unit is actuated from a closed configuration to an open configuration the corresponding guides are configured to guide the guide elements along second path and that the first path differs from the second path.

Using two rotating and translational paths allows optimising the closing trajectory separate from the opening trajectory.

In another embodiment of the invention the corresponding guides comprise a first guide part in succession a first curved section for the execution of a rotational and translational movement of the container and a second straight section that is parallel to the direction of the axis of the closing piston for the execution of a translation and the second guide part comprises in succession a second straight section that is parallel to the direction of the axis of the closing piston and is partially coincident but more extended that the straight section, and a second section that is transverse to the first section.

This embodiment of the invention achieves all the aforementioned objects of the invention.

An infusion unit for a machine for the production of an alimentary infusion is further disclosed, which comprises a container defining an infusion chamber, a closing piston for closing the infusion chamber, a control lever that can be activated for reversibly switching the infusion unit from an open configuration to a closed configuration of the infusion chamber, and a fixed frame supporting the container, the closing piston and the control lever, said container having an axis arranged coaxially with the axis of the closing piston in the closed configuration of the infusion chamber. The control lever has a hinge axis for the hinging thereof to said frame which, at least in the closed configuration of the infusion chamber, substantially intersects the extension of the axes of the container and of the closing piston, and in that said container comprises an inlet path for the infusion water, said path being connected by means of a flexible hose to a boiler for heating the infusion water.

With the term "substantially" it is to be understood that the hinging axis of the control lever to the frame must be located on the extension of the axes of the container and of the closing piston or must have a possible maximum offset, due to possible manufacturing tolerances, not greater than 5 millimetres.

Thanks to the special arrangement of the hinging axis of the control lever, not only is it possible to obtain a greatly simplified construction in terms of the movement kinematics of the infusion unit, minimising the number of components, but also to obtain an extremely compact construction by virtue of the limited angular and linear movements necessary for the moving parts to achieve their various operating positions.

Moreover, the special construction of the infusion unit that provides for the entry of the infusion water from an inlet path formed through the body of the container and the outflow of the infusion through an outflow route formed through the body of the closing piston which is generally located in a position that is easily accessible to the user makes it possible to position the point of dispensing into the cup directly at the closing piston from which the infusion flows out through gravity, without the need for specific ducts towards remote dispensing areas that can cause cooling of the infusion before it is collected in the cup thereby causing a deterioration of its organoleptic properties.

Other features of this invention are, moreover, defined in the subsequent claims.

Further characteristics and advantages of the invention will become evident from the description of a preferred but not exclusive execution of the infusion unit according to the invention, illustrated by way of non-limitative example in the accompanying drawings, in which:
- Fig. 1: shows a top view perspective of the infusion unit in the closed configuration;
- Fig. 2: shows a bottom view perspective of the infusion unit of Fig. 1 in the closed configuration;
- Fig. 3: shows a perspective view of the infusion unit of Fig. 1 in the intermediate opening configuration, in which, for convenience, the support frame has been partially removed;
- Fig. 4: shows a side elevation of the support frame of the infusion unit of Fig. 1, in which a bold line indicates the path followed by the guide pin in the switching of the infusion unit from the open configuration to the closed configuration of the infusion chamber;
- Fig.5: shows a left side elevation of the support frame of the infusion unit of Fig. 1, where a bold line indicates the path followed by the guide pin in the switching of the infusion unit from the closed configuration to the open configuration of the infusion chamber;

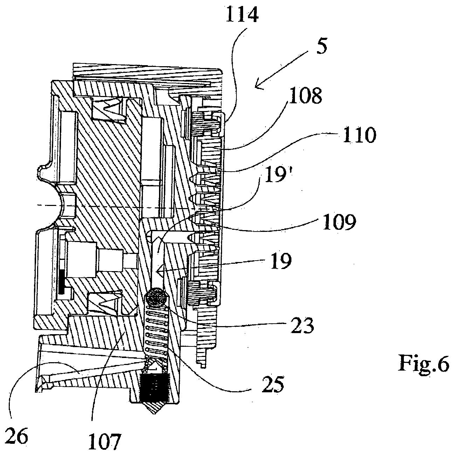

- Fig. 6: shows a section of the closing piston of the infusion unit of Fig. 1;
- Fig. 7: shows the infusion unit of Fig. 1 in section, in the initial configuration of opening of the infusion chamber, before the introduction of the capsule into the container;
- Fig. 8 to 12: show the infusion unit of Fig. 1 in section, after the introduction of a new capsule into the container, in the sequence of configurations obtained for the transition from the initial configuration of the opening of the infusion chamber to the final configuration of closing of the infusion chamber;
- Fig. 13 and 14: show the infusion unit of Fig. 1 in section, after the infusion, in the sequence of configurations obtained for the transition from the final configuration of the closure of the infusion chamber to the initial configuration of the opening of the infusion chamber during which the used coffee capsule is expelled from the container.

In the following terms indicating a direction, such as upper, or horizontal should be understood as the direction when the infusion unit is in its normal mode of operation. Upright, for example is to be understood as the direction opposite to the force of gravity, horizontal as the plane orientated perpendicular to the force of gravity.

With reference to these figures, an infusion unit for the espresso coffee machine is shown, generally indicated by the reference number 1. Naturally, the infusion unit is also applicable to automatic machines for the production of alimentary infusions of other type of beverages. In the following embodiment of the invention, infusion unit 1 is of the loadable type with pre-packaged doses of coffee 2. Such pre-packaged doses of coffee may come in the form of coffee pads or sealed capsules, for example. In the following the term capsule shall embrace all kinds of cartridges or containers with pre-packaged doses of coffee.

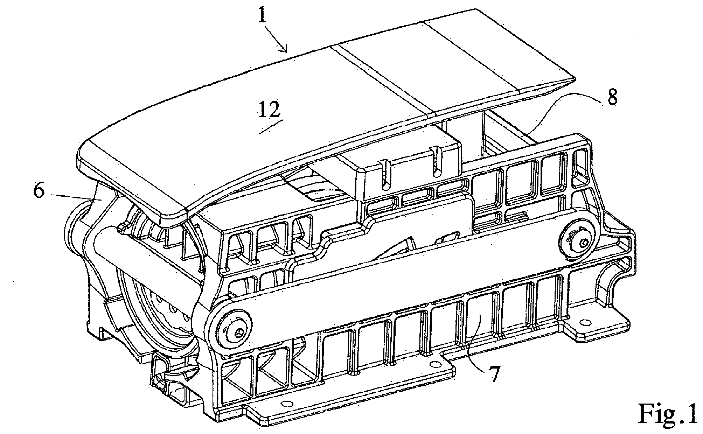

Infusion unit 1, as shown from a top view perspective in Fig. 1 in the closed configuration, comprises a support frame 6, 7, 8, 9 for a container 3 defining an infusion chamber 4, for a closing piston 5 of the infusion chamber 4, and a control mechanism for reversibly switching the infusion unit 1 from an open configuration to a closed configuration of the infusion chamber 4, in which the container 3 has its own 3' axis that is arranged coaxially with the 5' axis of the closing piston. The control mechanism may be driven by an electric motor, or by mechanical force exercised by a person. In the present embodiment the opening and closing of the infusion unit is described by means of a manually operated control lever 12.

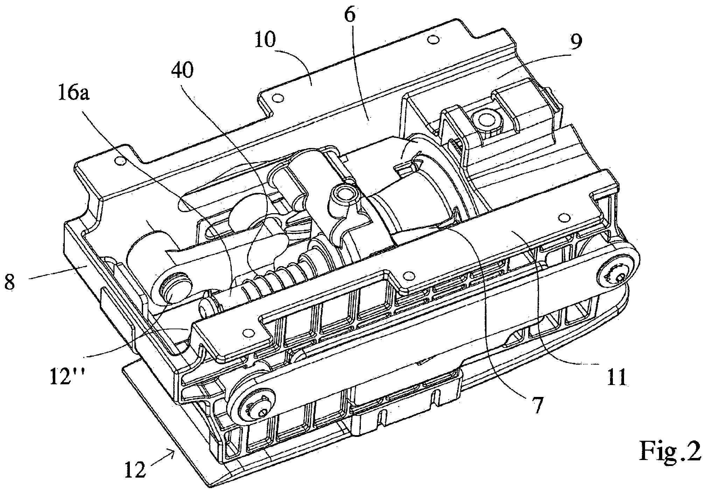

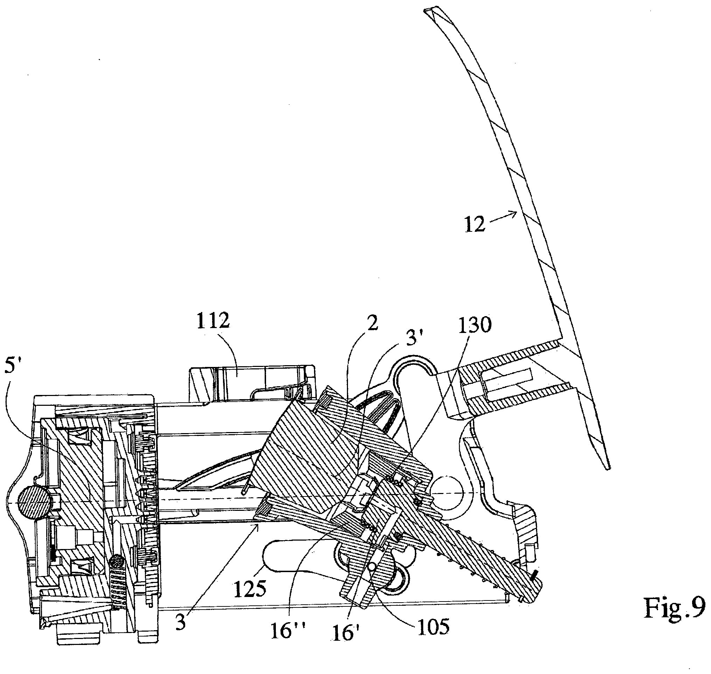

The infusion unit also includes a loader 112 (see Fig. 9) for loading with forced guidance of the capsule 2 into the container 3. As can be seen in Fig.1 and in Fig. 2, which shows a bottom view perspective of the infusion unit in the closed configuration, the support frame 6, 7, 8, 9 has a rectangular box-shaped configuration and is provided with two opposing longitudinal and spaced side walls 6, 7 defined by parallel flat plates, and with bases 8, 9 which transversely connect the side walls 6, 7 to their longitudinal ends. The side walls 6, 7 are also provided with external perimeter fins 10, 11 for securing to the frame of the coffee machine.

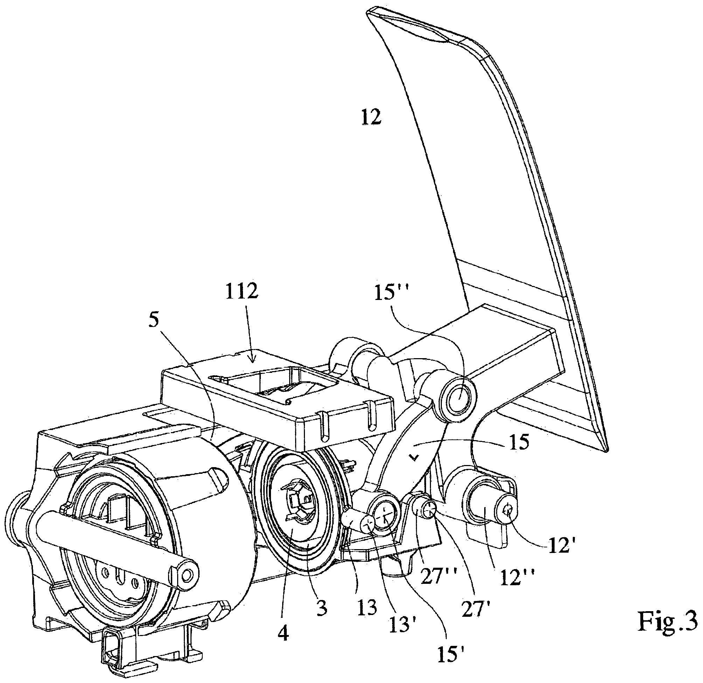

Fig. 3 shows a perspective view of the infusion unit in an intermediate opening configuration, in which, for convenience, the support frame has been partially removed. According to an aspect of the invention, the control lever 12 has a hinge axis 12' to the frame 6, 7, 8, 9, which at least in the closed configuration of the infusion chamber 4 substantially intersects the extension of the axes 3', 5' of the container 3 and of the closing piston 5. The oscillation axis 12' of the control lever 12 in particular is physically defined by a pivot pin 12" supported by the side walls 6, 7 of the support frame 6, 7, 8, 9 and oriented orthogonally to the main plane of the arrangement of the side walls 6, 7 of the support frame 6, 7, 8, 9. The closing piston 5 is fixed to the base 9, and extends into the compartment confined by the support frame 6, 7, 8, 9, with the axis 5' arranged in parallel to the direction of longitudinal development of the side walls 6, 7, and thus orthogonally to the hinge axis 12' of the control lever 12.

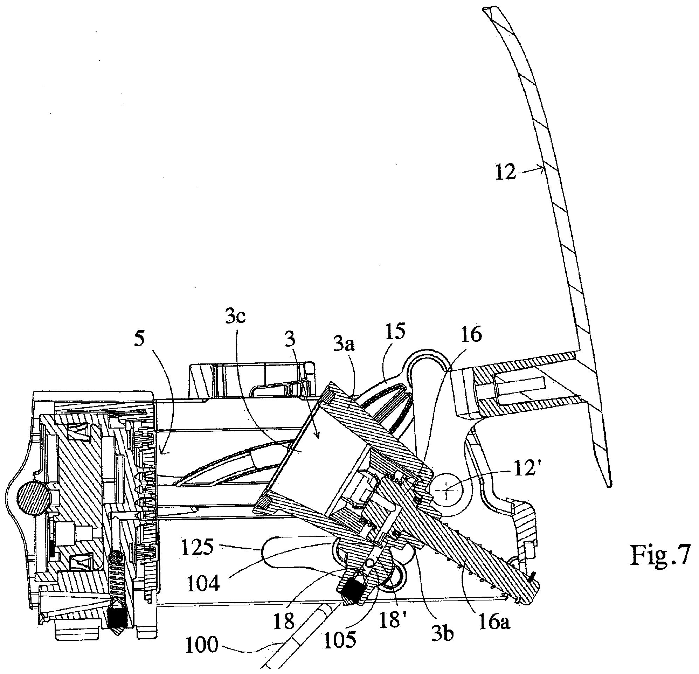

The container 3, also located in the compartment confined by the support frame 6, 7, 8, 9, has a side wall 3a (Fig. 7), a base 3b (Fig. 7) and an open mouth 3c (Fig. 7) for the introduction and expulsion of the capsule 2, and carries integrally one or several sliding guide elements along corresponding guides provided on the support frame 6, 7, 8, 9.

In particular the guide elements include a first pair of guide pins 13 and a second pair of guide pins 27. In one aspect of the invention the first pair of guide pins 13 protrude from opposite sides of the side wall 3a of the outside of container 3, close to the mouth 3c of the container. The second pair of guide pins 27 protrude from opposite sides of the side wall 3a of the outside of the container 3, close to the base 3b of the container 3. In the perspective view of the infusion unit 1 only one of each first pair of guide pins 13 and second pair of guide pins 27 is visible as the other first and second guide pins 13, 27 are concealed by the container 3. Corresponding first guides 14 and second guides 28 are formed by first grooves and second grooves created on the inner side walls of the sides 6, 7. The axes 13', 27' of the guide pins 13, 27 extend in parallel to the oscillation axis 12' of the lever 12.

The container 3 is connected to the control lever 12 via a transmission connecting rod 15. The hinging axis 15' of the transmission connecting rod 15 to the container 3 and the hinging axis 15" of the transmission connecting rod 15 to the control lever 12 are parallel to the oscillation axis 12' of the control lever 12. The hinging axis 15' of the transmission connecting rod 15 to the container 3 also intersects the axis 3' of the container 3. Basically the hinging axis 5' of the transmission connecting rod 15 to the container 3 is arranged on each side of the container side wall 3a between each of the first guide pin 13 and the second guide pin 27.

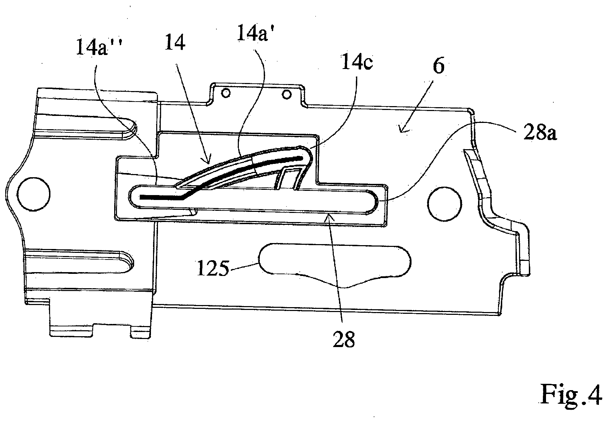

Fig. 4 shows a side elevation of the support frame of the infusion unit with the first guide 14 and the second guide 28. The first guide 14 is arranged and configured to subject the container 3 in connection with the second guide 28 to a rotational and translational movement. In one aspect of the invention the container 3, when moved from the opened position to the closed position follows a different trajectory than when being moved from the closed position to the opened position of the infusion unit 1. For this purpose the first guide 14 comprises a first guide part which the first guide pin 13 is forced to follow when the control lever 12 is closed and the transmission connecting rod 15 thus exercises a pushing force basically in direction towards the closing piston 5. When the control lever 12 is opened, the transmission connecting rod 15 exercises a pulling force, away from the closing piston 5, forcing the first guide pins 13 to follow a second guide part.

For this purpose the first guide part comprises in succession a first curved section 14a' for the execution of a rotational and translational movement of the container 3 starting from the loading position of loading of the capsule 2 and up to the alignment of its axis 3' with axis 5' of the closing piston 5, and a second straight section 14a' that is parallel to the direction of the axis 5' of the closing piston 5 for the execution of a translation thanks to which the container 3 engages the closing piston 5 for the closing of the infusion chamber 4. The first guide pins 13 thereby perform a trajectory indicated by a bold line in figure 4. The rotational movement practically tilts the container 3 from the opened position where the open mouth 3c of the container mouth 3 is directed upwards to the loader 112 to the closed position where the open mouth 3c is directed horizontally to engage with the closing piston 5.

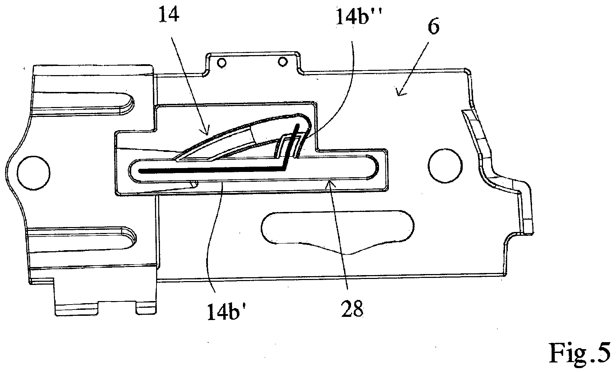

The second guide part comprises in succession a second straight section 14b' that is parallel to the direction of the axis 5' of the closing piston 5 and is partially coincident but more extended that the straight section 14a" to ensure a retraction of the container 3 from the closing piston 5 such as to create the necessary space for the expulsion and the fall of the used capsule 2, and a second section 14b" that is transverse to the first section 14b to tilt the container 3' from the position of alignment of its axis 3' with the axis 5' of the closing piston 5 to the loading position of a new capsule 2. The first guide pins 13 perform hereby a trajectory indicated by a bold line in figure 5.

The second guide 28 has an entirely straight arrangement and is set out in parallel to the axis of the closing piston 5, on the extension of the guide sections 14a" and 14b'.

The container 3 includes an inlet path 18 of the infusion water, connected by a flexible hose 100 to a boiler (not shown) for heating of the infusion water. The inlet path 18 is in the form of a channel 18' passing through the wall thickness of the container 3, and in particular presents an outer end 105 to which is applied the flexible hose 100 and an inner end 104. The flexible hose 100 passes through a special through-opening 125 formed in one side 6, 7 of the frame 6, 7, 8, 9.

The container 3 also provides internally an ejection piston 16 that is positioned coaxially to the container 3 and which is provided with a rod 16a that extends to the outside of the container 3 through the base 3b of the container 3. The ejection piston 16 is enabled to axially slide between a position adjacent to the base 3b of the container 3 in which it does not interfere with the positioning of the capsule 2 in the infusion chamber 4, and a position adjacent to the mouth 3c of the container 3 to determine the outlet of the load of used coffee 2 from the infusion chamber 4. The ejection piston 16 has a hydraulic connection path 101 between the infusion chamber 4 and the inlet path 18. The connecting path 101 comprises a conduit 101' passing through the interior of the ejection piston body 16. The conduit 101' is arranged and configured with an end 102 which opens coaxially into the infusion chamber 4 and one side end 103 which is connected to the inner end 104 of the conduit 18' when the ejection piston 16 is in the position adjacent to the base 3b of the container 3. At the end 102 of the conduit 101', a sharp point 120 is fixed on the body of the piston 16, projecting into the infusion chamber 4 to pierce a capsule 2. The sharp point 120 has a through hole 121 placed over the end 102 of the conduit 101'.

The face of the ejection piston 16 pointing towards the base 3b of the container 3 is provided with an active gasket 106. When the infusion unit 1 is dispensing the active gasket 106 axially seals around the hole 3e of the base 3b of the container 3 from which passes the rod 16a of the ejection piston 16 to prevent the infusion water leaking out from this same hole 3e. The body of the ejection piston 16 is formed by a first part 16' integral with the rod 16a and a second annular part 16" connected to the first part 16' in a sliding manner coaxially to the axis of the ejection piston 16 against and by action of an elastic element, for example a helical spring 130, interposed between the first part 16' and the second part 16". The spring 130 is in a state of compression such as to exert on the second part 16" a force of removal, in the axial direction from the first part 16'.

In particular, the conduct 101' is entirely formed in the first part 16' to which the point 120 is also attached. The second part 16" circumscribes the point 120 and faces the infusion chamber 4 with a concave surface 131 of a conjugated form at the base 2a of the capsule 2. The point 120 projects into the space defined by the concave surface 131 of the second part 16" of the body of the ejection piston 16. The second part 16" is bound to the first part 16' through the teeth 133 of the second part 16" that can be attachable to a shoulder 134 of the first part 16': in practice, in the absence of external stresses due to the action of the spring 130, the teeth 133 are hooked to the shoulder 134 and the second part 16" is in the configuration of maximum distance from the first part 16'.

The frame 6, 7, 8, 9 has a stop abutment 17 enabled to engage from the end 16a' of the rod 16a of the ejection piston 16 for moving the latter from the position adjacent to the base 3b of the container 3 to the position adjacent to the mouth 3c of the container 3.

The closing piston 5 provides an outflow route 19 of the infusion from the infusion chamber 4, provided with an infusion emulsion mechanical valve device. The outflow route 19 comprises a conduit 19' passing through the interior of the body 107 of the closing piston 5. The body 107 of the closing piston 5 is supported in a fixed manner by the frame 6, 7, 8, 9. The conduit 19' formed in the body 107 of the closing piston 5 ends with a wall 26 inclined downwards for the gravitational sliding towards the outside of the infusion for collection in a cup.

The closing piston 5 also includes a disc 108 supported in a manner that is translatable with respect to the body 107 in the direction of the axis of the closing piston 5. The disc 108 has a plurality of through holes 109 from which protruding piercing points 110 of the body 107 are extractable for piercing of the capsule 2. The disc 108 is translatable against and by the action of an elastic element (not shown) interposed between the disc 108 and the body 107 of the closing piston 5 in such a way that the piercing points 110 are inserted into the holes 109 when the infusion chamber 4 is open. The disc 18 is elastically deformable such as to adapt to the curving of the base 2b of the capsule 2 with which it comes into contact when the infusion chamber is closed.

The infusion emulsion mechanical valve device comprises a translatable shutter 23 for closing of the outflow route 19 of the infusion, and an elastic element 25 configured and arranged to exert on the shutter 23 an elastic calibrated thrust force in closure of the outlet path 19. The emulsion mechanical valve device is positioned in the conduit 19' in an intermediate position between the inclined wall 26 and the end of the conduit 19' which is directed towards the inside of the infusion chamber 4 when the latter is closed.

In the preferred solution illustrated in the figures are provided on the ejection piston 16 and on the closing piston 5 capsule piercing systems 2, which in a variant of the invention may also not be provided, for example when the capsule has walls that open a passage to the water simply thanks to the mere thrust pressure exerted by the water itself. The capsule 2 is also preferably of the type having a perimeter flange 2'. The hydraulic seal closure of the infusion chamber 4 is ensured by a first axial seal annular gasket 113 supported along the apical edge of the container 3, and by a second axial seal annular gasket 114 supported by the disc 108. In practice, when the infusion chamber 4 is closed, the perimeter flange 2' of the capsule 2 is clamped along its entire longitudinal development between the first and second gaskets 113 and 114.

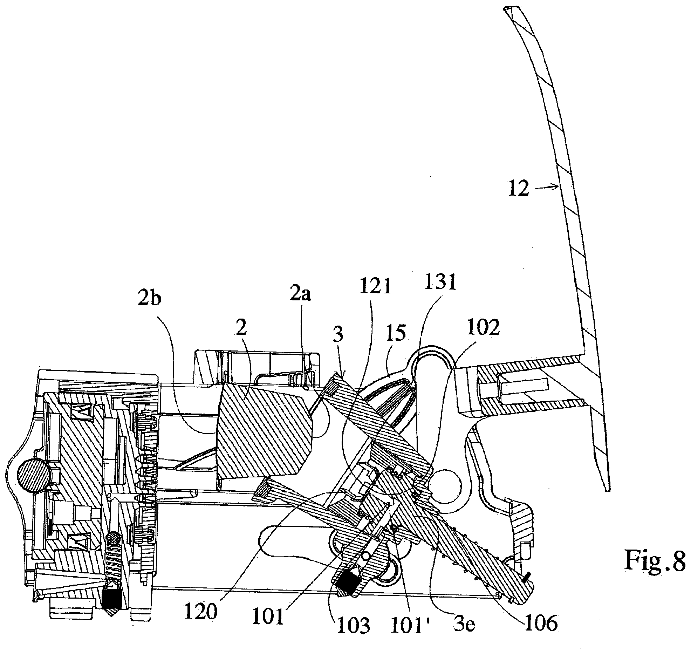

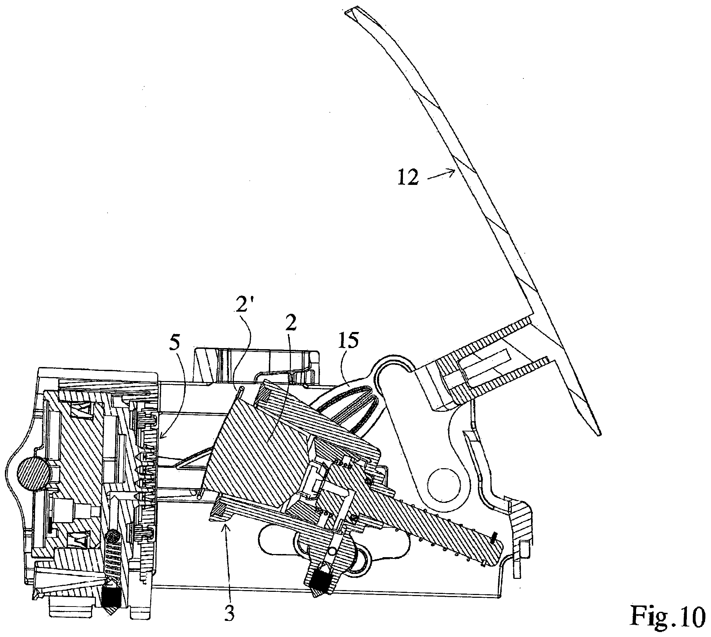

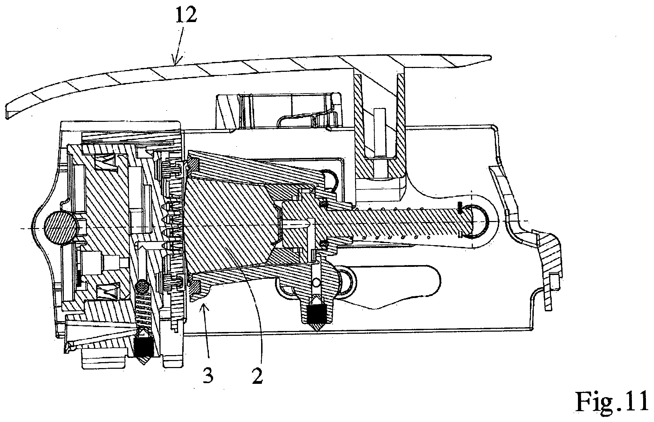

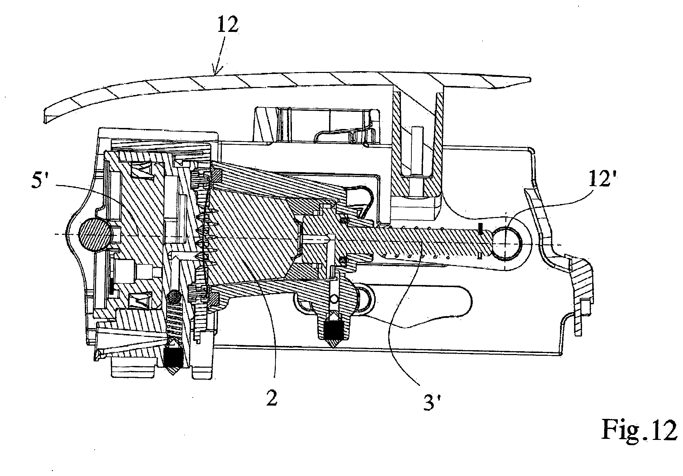

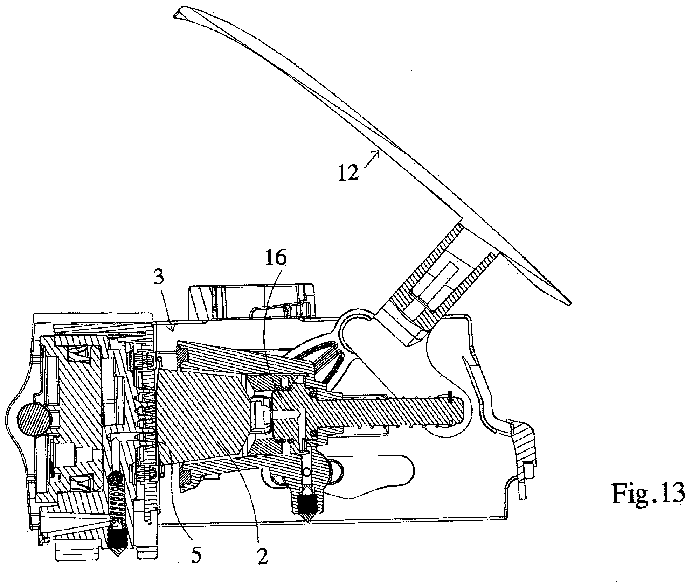

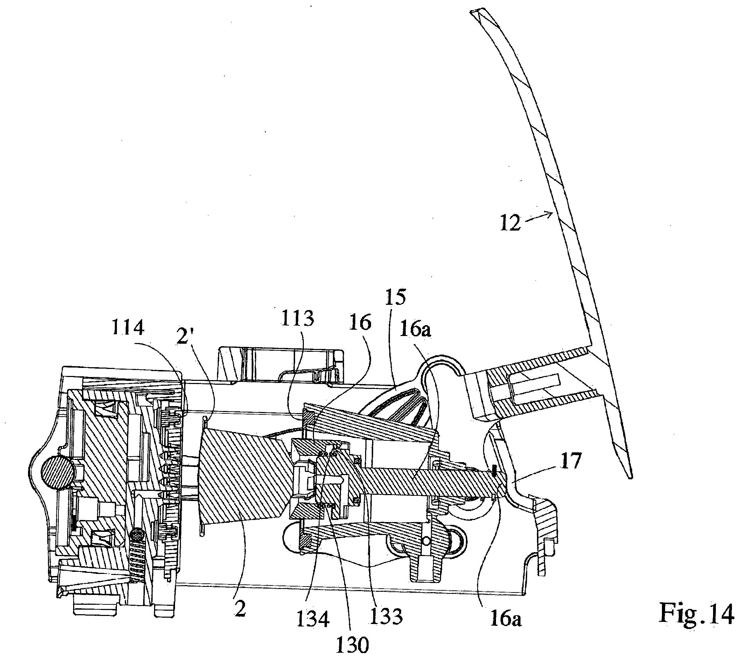

Operation of the infusion unit 1, illustrated in sequence from figure 7 to figure 14, is briefly the following. With the manual control lever 12 in an inclined upwards position, the container 3 has its axis 3' tilted upwards by approximately 45° to the axis 5' of the horizontally oriented closing piston 5. The first guide pin 13 is positioned at the end 14c of the guide section 14a and the second guide pin 27 is positioned at the end 28a of the guide 28.

The user introduces the capsule 2 into the loader 12 from which it falls by the force of gravity towards the container 3. As the container 3 is tilted upwards, the container 3 creates with its upwards directed rim of the mouth 3c of the container 3 a gap that is wide enough to let the capsule pass and partially fall into the container 3. The fall of the capsule 2 is stopped when its downside side wall hits the downside rim of the mouth 3c of the container 3. The capsule 2 at the end of the fall remains in a position of equilibrium in which it rests with its lower side wall against the inner edge of the mouth of the container 3 and with its flange 2' against an inner guide wall of the loader 112. At this point the user causes the closure of the control lever 12 making the control lever 12 fulfil an angular excursion of approximately 45°.

The angle to which the container axis is elevated in the open configuration is in the present embodiment around 25° in respect to the axis of the container 3 in the closed position. The person skilled in the art will readily appreciate, that the angle depends among other things on the dimension of the capsule 2, the dimensions of the container 3 and the position of the loader 112, especially the position of the guide wall of the loader 112, to allow the capsule, when falling from the loader 112 down to the container 3, to pass the upper rim of the container 3 and to come to rest on the downside open mouth 3c of the container 3.

In the initial part of the rotation of the control lever 12 in which the container 3 moves towards the closing piston 5, the point of contact between the capsule 2 and the inner edge of the mouth of the container 3 is moved towards the flange 2' until it passes over the centre of gravity of the capsule 2 which thus loses the initial position of equilibrium and turning backwards falls into the infusion chamber 4 where it impacts with the base 2a against the sharp point 120 on which it rests. In this condition the convex base 2a of the capsule 2 is spaced from the concave surface 131 of the second part 16" of the body of the ejection piston 16 and the flange 2' of the base 2b of the capsule 2 is spaced from the apical edge of the container 3.

Rotation of the control lever 12 is transmitted from the connecting rod 15 to the container 3 which is in turn guided by the pins 13, 27 to perform a rotational and translational movement due to the effect of sliding of the pin 13 along the guide section 14a', and finally a pure translation of engagement with the closing piston 5 for closure of the infusion chamber 4 due to the effect of sliding of the pin 13 along the guide section 14a". During the end phase of the closure of the infusion chamber 4, the front thrust force that the capsule 2 exerts against the disc 108 causes the elastic bending of the disc 108, initially flat, with which the latter is perfectly adapted to the convex surface of the base 2b of the capsule 2 where there is the flange 2', and the subsequent retraction of the disc 108 which allows the extraction of the points 110 from the holes 109 and the subsequent piercing of the base 2b of the capsule 2. In the meantime, the reaction force of the closing piston 5 on the capsule 2 causes, in addition to piercing of the base 2b of the capsule 2, piercing also of the base 2a of the capsule 2 by the point 120 which penetrates into the capsule 2 until the base 2a of the capsule 2 joins the concave surface 131 of the second part 16" of the ejection piston 16. At this point the reaction force of the closing piston 5 is transmitted to the second part 16" of the ejection piston 16 which moves back, as this reaction force prevails over the elastic force exerted in the opposite direction by the spring 130. Retraction of the second part 16" of the ejection piston 16 ends when the flange 2' of the capsule 2 is in contact with the gasket 113 carried by the apical edge of the container 3 and remains clamped between the latter and the gasket 114 carried by the closing piston 5. During the retraction of the second part 16" penetration of the sharp point 120 in the capsule 2 is completed with which an access path to the inside of the capsule 2 is definitively opened for the infusion water.

At this point, having achieved a watertight coupling between the container 3 and the closing piston 5 with which the infusion chamber 4 is closed, the infusion process is executed. A supply pump (not shown) sends the water under pressure, for example at 8 atmospheres, to the boiler (not shown) of the coffee machine, from the boiler to the flexible hose 100, and from the flexible hose 100 to the infusion chamber 4 through the conduit 18 and in cascade mode through the conduit 101' that is connected to the conduit 18 as the ejection piston 16 is initially located in the retracted position adjacent to the base 3b of the container 3.

The infusion obtained in the infusion chamber 4 is only discharged through the outflow route 19 when the pressure of the infusion generates on the shutter 23 a thrust force that is greater than the predetermined one exerted in the opposite direction on the shutter 23 by the elastic element 25. The dispensing of the infusion under pressure ensures incorporation within the infusion of the quantity of air required to emulsify it.

To perform a new infusion process the user must first bring the control lever 12 into the open position, rotating it in the direction opposite to the previous rotation. Rotation of the control lever 12 is transmitted by the connecting rod 15 to the container 3 which is in turn guided by the pins 13, 27 to perform initially a pure translation due to the effect of sliding of the pin 13 along the straight guide section 14b'. During this movement the container 3 is disengaged from the closing piston 5 reopening the infusion chamber 4 until at a certain point the end 16a' of the ejection piston 16 is intercepted by the stop abutment 17 which blocks its further axial sliding while instead allowing the container 3 to continue its run. The consequent relative movement of the container 3 with respect to the ejection piston 16 causes movement of the ejection piston 16 towards the mouth 3c of the container 3 by means of which the piston 16 pushes the capsule of used coffee 2 out of the open infusion chamber 4.

It must be pointed out that when the infusion chamber 4 is opened, the spring 130, no longer opposed by the closing piston 5, extends, distancing in the axial direction the second part 16" from the first part 16' of the expulsion piston 16. This distancing determines a relative movement between the capsule 2 that is provisionally integral with the second part 16" of the ejection piston 16 and the sharp point 120 that is integral with the first part 16" of the ejection piston 16' and the consequent almost complete extraction of the sharp point 120 from the base 2a of the capsule 2 which ensures that the capsule 2 can be properly discharged from the infusion chamber 4.

In the final part of the rotation of the control lever 12 the container 3, due to the effect of sliding of the pin 13 along the arched guide section 14b", performs a rotational and translational movement returning to the initial position of loading of a new coffee capsule 2. A dedicated return spring 40, fitted on the rod 16a of the ejection piston 16 and interposed between the latter and the base 3b of the container 3, is loaded becoming compressed during lifting of the ejection piston 16 from the base 3b to then return the ejection piston 16 against the base 3b when the rod 16a is disengaged from the stop abutment 17.

It must be noted that the special position of the hinging axis of the control lever 12 that intersects the extension of the axes 3', 5' of the container 3 and of the closing piston 5 at least in the closed configuration of the infusion unit 1 is also adaptable to infusion units that are subject to a movement different from that described, for example, a movement which involves the coaxiality between the axes 3' and 5' of the container 3 and of the closing piston 5 also at the opening configuration of the infusion unit 1.

The construction of the ejection piston and of the closing piston can also be different from what is now being described and shown, particularly in the case in which the infusion unit should work with a capsule having a different construction which does not involve for example the mechanical piercing of one or both of its bases to create an inlet path for the infusion water and an outlet path for the infusion. The infusion unit for a machine for the production of infused food thus conceived is susceptible to numerous modifications and variations, all falling within the inventive concept covered by the appended claims; moreover, all the items are replaceable by technically equivalent items. In practice there is a free choice of materials used, as well as their dimensions, according to the requirements and the state of the art.

**Reference list**

| | |
|---|---|
| infusion unit | 1 |
| capsule | 2 |
| perimeter flange | 2' |
| base of the capsule | 2b |
| container | 3 |
| axis of container | 3' |
| side wall of container | 3a |
| base of container | 3b |
| open mouth of container | 3c |
| hole | 3e |
| chamber | 4 |
| closing piston | 5 |
| axis of closing piston | 5' |
| support frame (side walls) | 6, 7 |
| support frame (bases) | 8, 9 |
| perimeter fins | 10, 11 |
| control lever | 12 |
| hinge axis of control lever | 12' |
| pivot pin | 12" |
| first guide pin | 13 |
| axes of the guide pins | 13', 27' |
| first corresponding guides | 14 |
| first curved section | 14a' |
| first straight section | 14a" |
| second curved section | 14b' |
| second straight section | 14b" |
| end of the guide section | 14c |
| connecting rod | 15 |
| hinging axis of the connecting rod | 15' |
| ejection piston | 16 |
| first part | 16' |
| annular part | 16" |
| rod | 16a |
| stop abutment | 17 |
| inlet path | 18 |
| channel | 18' |
| outflow route | 19 |
| conduit | 19' |
| shutter | 23 |
| elastic element | 25 |
| wall | 26 |
| second guide pin | 27 |
| second corresponding guides | 28 |
| end of the guide | 28a |
| return spring | 40 |
| hose | 100 |
| connection path | 101 |
| conduit | 101' |
| end | 102 |
| side end | 103 |
| inner end | 104 |
| outer end | 105 |
| body of closing piston | 107 |
| disc | 108 |
| through holes | 109 |
| piercing points | 110 |
| loader | 112 |
| first annular gasket | 113 |
| second annular gasket | 114 |
| sharp point | 120 |
| through hole | 121 |
| through-opening | 125 |
| spring | 130 |
| concave surface | 131 |
| teeth | 133 |
| shoulder | 134 |

## Claims

1. An infusion unit (1) for a machine for the production of an alimentary infusion from a beverage ingredient contained in capsule (2), comprising a container (3) with a mouth (3c) defining an infusion chamber (4), a closing piston (5) for closing the infusion chamber (4), control means (12) that can be activated for reversibly switching the infusion unit (1), from an open configuration to a closed configuration of the infusion chamber (4), and a mechanism for rotating the container (3) in the open configuration into an upright tilted position for receiving the capsule (2) from a loader (112) and for rotating the container (3) in a horizontal position when transitioning to the closed configuration, whereby the container (3) is associated with an ejection piston (16), the ejection piston (16) is enabled to slide coaxially on the inside and is provided with a rod (16a) that extends to the outside of the container (3) through a base (3b) of the latter, **characterized in that**
the ejection piston (16) has a via (101) of hydraulic connection between said infusion chamber (4) and an inlet (18) and that the connecting path (101) comprises a through conduit (101') through the interior of the body of the ejection piston (16).

2. The infusion unit of claim 1 wherein the upright tilted position of the container is configured such that the capsule at the end of the fall through the loader (112) rests with its side walls against the inner edge of the mouth (3c) of the container (3) and with a flange (2') against an inner guide wall of the loader (12)

3. The infusion unit (1) according to any one of the preceding claims, **characterised in that** said container (3) comprises one or more guide elements (13, 27) jointly along corresponding guides (14, 28) provided on a frame (6, 7, 8, 9) and arranged and configured so as to subject container (3) to a rotational and translational movement.

4. The infusion unit (1) according to claim 3 wherein when the infusion unit is actuated from an open configuration to a closed configuration the corresponding guides (14) are configured to guide the guide elements (13) along a first path and when the infusion unit is actuated from a closed configuration to an open configuration the corresponding guides (14) are configured to guide the guide elements (13) along second path and that the first path differs from the second path.

5. Infusion unit (1) according to claim 3 or 4 wherein the corresponding guides (14) comprise in a first guide part in succession a first curved section (14a') for the execution of a rotational and translational movement of the container (3) and a second straight section (14a") that is parallel to the direction of the axis (5') of the closing piston (5) for the execution of a translation and that a second guide part comprises in succession a second straight section (14b') that is parallel to the direction of the axis (5') of the closing piston (5) and is partially coincident but more extended than the straight section (14a"), and a second section (14b") that is transverse to the first section (14b).

6. The infusion unit (1) according any preceding claims **characterised in that** said ejection piston (16) has a first part (16') that is constrained with the interposition of an elastic element (130) to a second part (16") that is translatable with respect to the first part (16') in the direction of the axis of the ejection piston (16).

7. The infusion unit (1) according to one of the preceding claims 3, 4, 5 or 6 **characterised in that** said closing piston (5) comprises a body (107) supported in a fixed manner by said frame (6, 7, 8, 9) and wherein an outflow route (19) is afforded, said path (19), in turn, ending with a wall (26) that is inclined downwards for gravitational sliding of the infusion outwards for collection in a cup.

8. The infusion unit (1) according to the preceding claim, **characterised in that** said closing piston (5) comprises a disc (108) that is translatable in the axial direction of the closing piston (5) and having a plurality of through holes (109) wherefrom protruding piercing points (110) of said fixed body (107) are extractable for piercing a capsule (2) that can be positioned in said infusion chamber (4).

9. The infusion unit (1) according to the preceding claim, **characterised in that** said disc (108), is elastically deformable from a flat configuration to a concave configuration.

10. The infusion unit (1) according to any one of the preceding claims, **characterised in that** a valve device comprises a translatable shutter (23) and an elastic element (25) that is configured and arranged so as to exert a calibrated elastic pushing force on the shutter (23), closing said outflow route (19).

11. The infusion unit (1) according to any one of the preceding claims, **characterised in that** there is provided a transmission connecting rod (15) connecting said control lever (12) to said container (3) and/or that along the top edge, said container (3) has a hydraulic seal (113) configured and arranged so as to act in an axial direction against a perimeter flange (2') of a capsule (2) that can be positioned in said infusion chamber(4).

12. The infusion unit (1) according to any of the preceding claims, **characterized by** said container (3) having an axis (3') arranged coaxially with the axis (5') of the closing piston (5) in the closed configuration of the infusion chamber (4), **characterised in that** said control lever (12) has a hinge axis (12') for the hinging thereof to said frame (6, 7, 8, 9) which, at least in the closed configuration of the infusion chamber (4), substantially intersects the extension of the axes (3', 5') of the container (3) and of the closing piston (5), and **in that** said container (3) comprises an inlet path (18) for the infusion water, said path (18) being connected by means of a flexible hose (100) to a boiler for heating of the infusion water.

13. An automatic coffee machine comprising an infusion unit (1) in accordance with any one of the preceding claims.

## Patentansprüche

1. Brühgruppe (1) für eine Maschine zum Zubereiten eines flüssigen Nahrungsmittelprodukts aus einer, in einer Kapsel (2) enthaltenen Getränkezutat, beinhaltend einen Behälter (3) mit einer Öffnung (3c) der eine Brühkammer(4) begrenzt, einen Verschlusskolben (5) zum Verschließen der Brühkammer (4), Steuermittel (12) die betätigt werden können um die Brühgruppe (1) von einem geöffneten Zustand der Brühkammer (4) umkehrbar in einem geschlossenen Zustand der Brühkammer (4) zu überführen, und einer Mechanik zum Drehen des Behälters (3) im geöffneten Zustand in eine aufrecht geneigte Position zum Aufnehmen der Kapsel (2) von einer Ladevorrichtung (112), und beim Übergang in den geschlossenen Zustand zum Drehen des Behälters (3) in eine horizontale Position, wobei dem Behälter (3) ein Auswurfkolben (16) zugeordnet ist, wobei der Auswurfkolben (16) dazu geeignet ist koaxial im Innenraum zu gleiten und dass der Auswurfkolben (16) eine Stange (16a) aufweist, die durch eine Basis des Behälters (3) über die Außenseite des Behälters (3) hinausragt,
**dadurch gekennzeichnet, dass**
der Auswurfkolben (16) eine hydraulische Verbindung (101) zwischen besagter Brühkammer (4) und einem Einlass (18) aufweist und dass die hydraulische Verbindung (101) eine Durchleitung (101') durch das Innere des Auswurfskolbenkörpers (16) umfasst.

2. Brühgruppe (1) nach Anspruch 1, wobei die aufwärts geneigte Position des Behälters (3) so ausgerichtet ist, dass die Kapsel am Ende ihres Falls durch die Ladevorrichtung (112) mit ihrer Seitenwand gegen einen inneren Behälteröffnungsrand (3c) und mit einem Flansch gegen eine innere Führungswand der Ladevorrichtung (112) zum Ruhen kommt.

3. Brühgruppe (1) nach einem der vorangegangenen Ansprüche, **dadurch gekennzeichnet dass** der Behälter (3) ein oder mehrere Führungselemente (13, 27) aufweist, welche mit von einem Rahmen (6, 7, 8, 9) bereitgestellten Führungen (14, 28) korrespondieren und die dazu vorgesehen und eingerichtet sind den Behälter (3) in eine Drehbewegung und eine translatorische Bewegung zu zwingen.

4. Brühgruppe (1) nach Anspruch 3, wobei wenn die Brühgruppe (1) von dem offenen Zustand in den geschlossenen Zustand überführt wird, die korrespondierenden Führungen (14) ausgestaltet sind die Führungselemente (13) entlang eines ersten Pfades und wenn die Brühgruppe (1) von dem geschlossenen Zustand in den geöffneten Zustand überführt wird, die korrespondierenden Führungen (14) ausgestaltet sind die Führungselemente (13) entlang eines zweiten Pfades zu führen, wobei der erste Pfad und der zweite Pfad sich voneinander unterscheiden.

5. Brühgruppe (1) nach Anspruch 3 oder 4, wobei die korrespondieren Führungen (14) in einem ersten Führungsteil aufeinanderfolgend einen ersten gekrümmten Bereich (14a') zur Ausführung der Dreh- und translatorischen Bewegung des Behälters (3) und einen zweiten geradlinigen Bereich (14a"), parallel in Achsrichtung (5') des Verschlusskolben (5) zur Ausführung einer Translation aufweisen, und dass ein zweiter Führungsteil aufeinanderfolgend einen geraden Bereich (14b'), welcher parallel zur Achsrichtung (5') des Verschlusskolben (5) ist und teilweise übereinstimmend aber mehr getreckt als der erste gerade Bereich (14a"), und einen zweiten Bereich (14b"), welcher quer zu dem ersten Bereich (14b) ist, aufweist.

6. Brühgruppe (1) nach einem der vorangegangenen Ansprüche, **dadurch gekennzeichnet, dass** der Auswurfkolben (16) einen ersten Bereich (16') hat welcher durch ein zwischengeschaltetes elastisches Element gegenüber einem zweiten Bereich (16') abgegrenzt ist, wobei der zweite Bereich (16") in Bezug auf den ersten Bereich (16') eine Translation in der Richtung der Achse des Auswurfskolbens (16) auszuführen vermag.

7. Brühgruppe (1) nach einem der Ansprüche 3, 4, 5, oder 6 **dadurch gekennzeichnet, dass** der Verschlusskolben (5) einen Körper (107) umfasst welcher durch den Rahmen (6, 7, 8, 9) in fester Weise gestützt ist und wodurch ein Ausflusskanal (19) bereitgestellt wird, und dieser Ausflusskanal (19) seinerseits mit einer Wand (26) abschließt, welche nach unten geneigt ist und so dem aufgebrühten Produkt ein Ausfließen nach außen durch den Effekt der Schwerkraft zum Auffangen in einer Tasse zu ermöglicht.

8. Brühgruppe (1) nach einem der vorangegangenen Ansprüche, **dadurch gekennzeichnet, dass** der Verschlusskolben (5) eine Scheibe (108) umfasst welche in axialer Richtung des Verschlusskolbens (5) eine translatorische Bewegung auszuführen vermag und welche eine Mehrzahl von Durchgangslöchern (109) aufweist, von welchen hervorstehende Lochdorne (110) des festen Körpers (107) ausziehbar sind um die Kapsel (2), welche in der Brühkammer (4) aufgenommen sein kann, zu durchstechen.

9. Brühgruppe (1) nach dem vorangegangenen Anspruch, **dadurch gekennzeichnet, dass** die Scheibe (108) elastisch von einem flachen Zustand in einen konkaven Zustand verformbar ist.

10. Brühgruppe (1) nach einem der vorangegangenen Ansprüche, **dadurch gekennzeichnet, dass** eine Ventileinrichtung einen verschiebbaren Verschluss (23) und ein elastisches Element (25) umfasst, welches ausgebildet und dazu vorgesehen ist eine definierte elastische Druckkraft auf den Verschluss (23) auszuüben, um den Ausflusskanal (19) zu schließen.

11. Brühgruppe (1) nach einem der vorangegangenen Ansprüche, **dadurch gekennzeichnet, dass** ein Verbindungsstab (15) den Bedienhebel (12) mit dem Behälter (3) verbindet und/oder dass entlang der oberen Kante der Behälter (3) eine hydraulische Dichtung (113) aufweist, welche dazu vorgesehen und ausgebildet ist in einer axialen Richtung gegen einen umlaufenden Flansch (2') der Kapsel (2), die in der Brühkammer (4) aufgenommen sein kann, zu wirken.

12. Brühgruppe (1) nach einem der vorangegangenen Ansprüche, **dadurch gekennzeichnet, dass** der Behälter (3) eine Achse (3') aufweist, welche koaxial zu der Achse des Verschlusskolbens (5) angeordnet ist, und **gekennzeichnet dadurch dass** der Bedienhebel (12) eine Scharnierachse (12') aufweist, an welcher der Rahmen (6, 7, 8, 9) klappbar angebracht werden kann, und dass der Rahmen (6, 7, 8, 9) zumindest im geschlossenen Zustand der Brühkammer (4) die Verlängerung der Achsen (3', 5') des Behälters (5) und des Verschlusskolben (5) wesentlich überkreuzt, und dass der Behälter (3) einen Einlasskanal (18) für Aufbrühwasser umfasst, wobei der Einlasskanal (18) mittels eines flexiblen Schlauchs (100) mit einem Kessel zum Erhitzen des Aufbrühwassers verbunden ist.

13. Eine automatische Kaffeemaschine umfassend eine Brühgruppe (1) nach einem der vorangegangenen Ansprüche,

## Revendications

1. Unité d'infusion (1) pour une machine destinée à la production d'une infusion alimentaire à partir d'un ingrédient de boisson contenu dans une capsule (2), comprenant un récipient (3) avec une embouchure (3c) définissant une chambre d'infusion (4), un piston de fermeture (5) pour fermer la chambre d'infusion (4), des moyens de commande (12) qui peuvent être activés pour commuter de manière réversible l'unité d'infusion (1), d'une configuration ouverte à une configuration fermée de la chambre de perfusion (4), et un mécanisme pour faire tourner le récipient (3) en configuration ouverte dans une position verticale inclinée pour recevoir la capsule (2) d'un chargeur (112) et pour faire tourner le récipient (3) dans une position horizontale lors de la transition vers la configuration fermée, le récipient (3) étant associé à un piston d'éjection (16), **caractérisée en ce que** le piston d'éjection (16) peut coulisser coaxialement à l'intérieur et comprend une tige (16a) qui s'étend vers l'extérieur du récipient (3) à travers une base (3b) de ce dernier et que le piston d'éjection (16) a un passage (101) de connexion hydraulique entre ladite chambre de perfusion (4) et une entrée (18) et que le passage de connexion (101) comprend un conduit traversant (101') à l'intérieur du corps du piston d'éjection (16).

2. Unité de perfusion selon la revendication 1, **caractérisée en ce que** la position verticale inclinée du récipient est configurée de telle sorte que la capsule, à la fin de la chute à travers le chargeur (112), repose avec ses parois latérales contre le bord intérieur de l'embouchure (3c) du récipient (3) et avec une bride (2') contre une paroi de guidage intérieure du chargeur (12).

3. Unité de perfusion (1) selon l'une quelconque des revendications précédentes, **caractérisée en ce que** ledit conteneur (3) comprend un ou plusieurs éléments de guidage (13, 27) conjointement le long de guides correspondants (14, 28) prévus sur un cadre (6, 7, 8, 9) et agencés et configurés de manière à soumettre le conteneur (3) à un mouvement de rotation et de translation.

4. Unité de perfusion (1) selon la revendications 4, **caractérisée en ce que** quand l'unité de perfusion est actionnée d'une configuration ouverte à une configuration fermée, les guides correspondants (14) sont configurés pour guider les éléments de guidage (13) le long d'un premier chemin et quand l'unité de perfusion est actionnée d'une configuration fermée à une configuration ouverte, les guides correspondants (14) sont configurés pour guider les éléments de guidage (13) le long d'un second chemin et que le premier chemin diffère du second chemin.

5. Unité de perfusion (1) selon l'une des revendications 3 ou 4, **caractérisée en ce que** les guides correspondants (14) comprennent dans une première partie de guide successivement une première section incurvée (14a') pour l'exécution d'un mouvement de rotation et de translation du récipient (3) et une deuxième section droite (14a") qui est parallèle à la direction de l'axe (5') du piston de fermeture (5) pour l'exécution d'une translation et que une deuxième partie de guidage comprend successivement une deuxième section droite (14b') qui est parallèle à la direction de l'axe (5') du piston de fermeture (5) et qui coïncide partiellement mais plus étendue que la section droite (14a"), et une deuxième section (14b") qui est transversale à la première section (14b).

6. Unité de perfusion (1) selon les revendications précédentes, **caractérisée en ce que** ledit piston d'éjection (16) a une première partie (16') contrainte par l'interposition d'un élément élastique (130) à une seconde partie (16") mobile par rapport à la première partie (16') dans la direction de l'axe du piston d'éjection (16).

7. Unité de perfusion (1) selon l'une des revendications 3, 4, 5 ou 6, **caractérisée en ce que** ledit piston de fermeture (5) comprend un corps (107) supporté de manière fixe par le cadre (6, 7, 8, 9) et dans lequel une voie d'écoulement (19) est prévue, ladite voie (19) se terminant à son tour par une paroi (26) qui est inclinée vers le bas pour le glissement gravitationnel de la perfusion vers l'extérieur pour la collecte dans une tasse.

8. Unité de perfusion (1) selon la revendication précédente, **caractérisée en ce que** ledit piston de fermeture (5) comprend un disque (108) mobile dans la direction axiale du piston de fermeture (5) et ayant une pluralité de trous traversants (109) à partir desquels des points de perçage saillants (110) dudit corps fixe (107) sont extractibles pour percer une capsule (2) qui peut être positionnée dans ladite chambre de perfusion (4).

9. Unité de perfusion (1) selon la revendication précédente, **caractérisée en ce que** ledit disque (108), est élastiquement déformable d'une configuration plate à une configuration concave.

10. Unité de perfusion (1) selon l'une quelconque des revendications précédentes, **caractérisée en ce que** un dispositif de valve comprend un obturateur mobile (23) et un élément élastique (25) configuré et agencé de manière à exercer une force de poussée élastique calibrée sur l'obturateur (23), fermant ladite voie d'écoulement (19).

11. L'unité de perfusion (1) selon l'une quelconque des revendications précédentes, **caractérisée en ce qu'**il est prévu une bielle de transmission (15) reliant le levier de commande (12) au conteneur (3) et/ou **en ce que** le long du bord supérieur, le conteneur (3) présente un joint hydraulique (113) configuré et agencé de manière à agir dans une direction axiale contre une bride périphérique (2') d'une capsule (2) qui peut être positionnée dans ladite chambre de perfusion (4).

12. Unité de perfusion (1) selon l'une quelconque des revendications précédentes, **caractérisée par** ledit conteneur (3) ayant un axe (3') disposé coaxialement à l'axe (5') du piston de fermeture (5) dans la configuration fermée de la chambre de perfusion (4), **caractérisée en ce que** le levier de commande (12) a un axe d'articulation (12') pour son articulation sur le cadre (6, 7, 8, 9) qui, au moins dans la configuration fermée de la chambre de perfusion (4), coupe sensiblement le prolongement des axes (3', 5') du récipient (3) et du piston de fermeture (5), et **en ce que** le récipient (3) comprend un chemin d'entrée (18) pour l'eau de perfusion, ledit chemin (18) étant relié au moyen d'un tuyau flexible (100) à une bouilloire pour le chauffage de l'eau de perfusion.

13. Machine à café automatique comprenant une unité d'infusion (1) selon l'une des revendications précédentes.
